# EUROPÄISCHE PATENTSCHRIFT

(11) **EP 1 679 232 B1**
(45) Veröffentlichungstag und Bekanntmachung des Hinweises auf die Patenterteilung: **18.03.2009**
(21) Anmeldenummer: 05000191.6
(22) Anmeldetag: 07.01.2005
(51) Int. Cl.: B60R 11/02, B60R 16/02

(54) **Fahrzeug mit Andockstation für tragbare Anwendungsgeräte**
Vehicle with docking station for portable user terminals
Véhicule avec station d'accostage pour terminaux portables d'usager

(43) Veröffentlichungstag der Anmeldung: 12.07.2006
(73) Patentinhaber: Casco Schoeller GmbH, 60437 Frankfurt am Main (DE)
(72) Erfinder: Messerschmid, Günther, 63075 Offenbach (DE); Moreno-Romero, Pedro, 63075 Offenbach (DE)
(74) Vertreter: Luderschmidt, Schüler & Partner

(56) Entgegenhaltungen:
- US-A- 4 885 523
- US-A1- 2001 001 319
- US-B1- 6 375 344

## Beschreibung

Die vorliegende Erfindung betrifft ein Fahrzeug, insbesondere ein Pkw, mit mindestens einem Peripheriegerät und mindestens einer Buchse zur Verbindung von anwenderseitigen Endgeräten mit dem mindestens einen Peripheriegerät, wobei unter einem Fahrzeug sämtliche Land-, Wasser-, Luft-, Raum- und andere Fahrzeuge verstanden werden.

Hochwertige Multimedia-Komponenten können den Ausschlag für den Erwerb eines bestimmten Neufahrzeugs im Pkw-Segment geben. Nahezu jeder Pkw-Hersteller bietet inzwischen Navigationsgeräte, High-End-Unterhaltungselektronik und Freisprecheinrichtungen für alle Modelle an, selbst für Modelle der Kleinwagenserie. Zahlungskräftigen Kunden bieten die Automobilkonzerne bereits komplexe, von leistungsstarken Mikro-Chips angetriebene Car-Infotainment-Module an, die auf zentralen LC-Displays im Armaturenbrett neben wichtigen Fahrzeuginformationen auch dynamische Navigationskarten anzeigen und den Zugriff auf Telekommunikationsfunktionen, Entertainment-Features, wie DVD, und Internet-Dienstleistungen erlauben.

Mit dem immer höher werdenden Technisierungsgrad des Interieurs von Pkw verringert sich auch der für den Verbau der verschiedenen Unterhaltungs- und Informationselemente vorgesehene Einbauraum im Interieur.

Trotz des immer stärkeren Einzugs von Unterhaltungselementen und Informationselementen in das Interieur von heutigen serienmäßigen Pkw ist die Kommunikation von verschiedenen Unterhaltungs- und Informationselementen mit anwenderseitigen Endgeräten, wie z.B. Notebooks, Mobiltelefone, Pocket PCs, Handhelds etc., beispielsweise zur Übertragung von anwenderseitigen Daten, wie z.B. Navigationskarten oder Musikdateien etc., nicht möglich.

Anwenderseitige Endgeräte sind in heutigen serienmäßigen Pkw lediglich mittels eines entsprechenden Auto-Adapters für einen Zigarettenanzünder an einen Zigarettenanzünder, beispielsweise im Armaturenbrett oder in der Mittelkonsole eines Fahrzeugs, an das Fahrzeugbordnetz zur Stromversorgung anschließbar.

Die Verbindungseinheit bestehend aus einem entsprechenden Auto-Adapter für den Zigarettenanzünder, einem in den Auto-Adapter einsetzbaren Stecker und dem Zigarettenanzünder weist zudem relativ große Abmessungen auf, die insbesondere hinsichtlich zukünftiger Fahrzeugentwicklungen, vor allem für das Interieur von Pkw, nachteilig sind, weil das Interieur von Pkw aufgrund der immer engeren Platzverhältnisse nach möglichst kleinen Verbindungseinheiten verlangt.

Die US 6,375,344 beschreibt gemäß dem Oberbegriff des Anspruchs 1 einen Gabelstapler oder einen Lieferwagen, der über ein Bordnetz, ein Display, eine Tastatur und einen Drucker sowie einen Datenbus und eine Schnittstelle verfügt. An den Datenbus und das Bordnetz können mehrere tragbare Datenerfassungssysteme in Form von Datenterminals angeschlossen werden. Das Datenterminal wird in einen Systemeinschub eingeschoben, der eine Docking-Station darstellt. Wenn das Datenterminal in den Systemeinschub eingeschoben ist, wird eine elektrische Verbindung sowohl zum Übertragen von Daten als auch zur Stromversorgung des Datenterminals hergestellt.

Der Erfindung liegt deshalb die Aufgabe zugrunde, ein Fahrzeug, insbesondere ein Pkw, bereitzustellen, bei dem die obige Kommunikation von verschiedenen Unterhaltungs- und Informationselementen mit anwenderseitigen Endgeräten möglich ist.

Die Lösung dieser Aufgabe erfolgt erfindungsgemäß mit den im Patentanspruch 1 angegebenen Merkmalen.

Das erfindungsgemäße Fahrzeug, insbesondere ein Pkw, umfasst ein Bordnetz, mindestens ein Peripheriegerät und mindestens eine ein Gehäuse aufweisende Buchse zur Verbindung von verschiedenen anwenderseitigen Endgeräten, wie z.B. Notebooks, Mobiltelefone, Pocket PCs, Handhelds etc., mit dem mindestens einen Peripheriegerät, beispielsweise ein Infotainment-System, wobei die mindestens eine Buchse sowohl mindestens einen mit einer Stromleitung verbundenen Anschluss zur Versorgung der anwenderseitigen Endgeräte mit Strom als auch mindestens einen mit einer Datenleitung verbundenen Anschluss zur Übertragung von Daten zwischen den anwenderseitigen Endgeräten und dem mindestens einen Peripheriegerät aufweist. Dabei ist die mit der mindestens einen Buchse verbundene Stromleitung elektrisch mit dem Bordnetz und die mit der mindestens einen Buchse verbundene Datenleitung mit dem mindestens einen Peripheriegerät verbunden.

Bei einer bevorzugten Ausführungsform der Erfindung besteht die mit der mindestens einen Buchse verbundene Datenleitung aus einem metallischen Basismaterial als Medium zur Übertragung von Informationssignalen.

Bei einer bevorzugten Ausführungsform der Erfindung ist die mit der mindestens einen Buchse verbundene Datenleitung eine USB Datenleitung.

Bei einer weiteren bevorzugten Ausführungsform der Erfindung umfasst das erfindungsgemäße Fahrzeug mindestens eine Buchse mit einer Doppelfunktion, aufweisend einen Anschluss für die Anbindung an eine Stromleitung und einen Anschluss für die Anbindung an eine Datenleitung.

Bei einer weiteren bevorzugten Ausführungsform der Erfindung umfasst das erfindungsgemäße Fahrzeug mindestens eine Buchse mit einer Dreifachfunktion (Tripelfunktion), aufweisend zwei Anschlüsse für die Anbindung an zwei Stromleitungen und einen Anschluss für die Anbindung an eine Datenleitung.

Bei einer weiteren bevorzugten Ausführungsform der Erfindung ist der mindestens eine mit der Datenleitung verbundene Anschluss der mindestens einen Buchse als USB Anschluss für anwenderseitige USB Anwendungen ausgebildet.

Bei einer weiteren bevorzugten Ausführungsform der Erfindung bestehen die Anschlüsse der mindestens einen Buchse aus einem Federstahl.

Bei einer weiteren bevorzugten Ausführungsform der Erfindung sind die Anschlüsse der mindestens einen Buchse mittels Kabeln mit einer Stromleitung und einer Datenleitung verbindbar.

Bei einer weiteren bevorzugten Ausführungsform der Erfindung sind die Anschlüsse der mindestens einen Buchse mittels Flachsteckern mit einer Stromleitung und einer Datenleitung verbindbar.

Das erfindungsgemäße Fahrzeug ermöglicht somit die obige Kommunikation von verschiedenen Unterhaltungs- und Informationselementen mit anwenderseitigen Endgeräten, wobei ein anwenderseitiges Endgerät beim Anschluss an die mindestens eine Buchse zugleich durch das Fahrzeugbordnetz mit Strom versorgbar ist.

Das erfindungsgemäße Fahrzeug ermöglicht ferner anwenderseitige USB-Anwendungen, insbesondere Auto-USB-Anwendungen, beispielsweise zur Verbindung von mobilen Computern (Notebooks, Pocket PCs, Handhelds etc.) mit dem Bordcomputer, zur Verbindung des Bordtelefons mit mobilen Telefonen, zur Verbindung von Car-Infotainment-Modulen mit mobilen Computern, zur Verbindung von Geräten zum Abspielen digitaler Audiodateien mit Bordaudio-Systemen oder zur Verbindung des Bordnavigationssystems mit mobilen Computern und dergleichen.

Darüber hinaus sind beim erfindungsgemäßen Fahrzeugs die anwenderseitigen Engeräte zur Kommunikation mit fahrzeugseitigen bzw. peripherieseitigen Systemen an kraftfahrzeuginterne Datenbussysteme, z.B. LIN-Bus, CAN-Bus, anschließbar.

Die erfindungsgemäße Verbindungseinheit zeichnet sich durch ihre sehr kleinen Abmessungen aus, weshalb sie für die zuvor genannten multimedialen Anwendungen, insbesondere im Hinblick auf zukünftige Fahrzeugentwicklungen, besonders geeignet bzw. anwendbar ist.

Die mindestens eine Buchse des erfindungsgemäßen Fahrzeugs stellt zudem ein offenes System dar, das, über die bevorzugte Anwendung in Pkw hinaus, vielseitige Anwendungsmöglichkeiten in verschiedenen Fahrzeugen, insbesondere zukünftigen Fahrzeugen bietet. Beispielsweise ließe sich die mindestens eine Buchse des erfindungsgemäßen Fahrzeugs auch zur anwenderseitigen bzw. passagierseitigen Nutzung in Flugzeugsitze des zivilen Luftverkehrs zur Kommunikation zwischen Peripheriegeräten eines zivilen Flugzeugs und anwenderseitigen bzw. passagierseitigen Endgeräten einbauen, wobei ein anwenderseitiges Endgerät während der Kommunikation mit einem Peripheriegerät zugleich durch das Flugzeugbordnetz direkt aufladbar wäre.

Im folgenden werden Ausführungsbeispiele der Erfindung unter Bezugnahme auf die Zeichnungen näher erläutert. Es zeigen:
- Figur 1: eine schematische Darstellung des erfindungsgemäßen Fahrzeugs mit einem Bordnetz, mindestens einem Peripheriegerät und mindestens einer Buchse zur Verbindung von anwenderseitigen Engeräten mit dem mindestens einen Peripheriegerät,
- Figur 2: eine perspektivische Ansicht einer Buchse des erfindungsgemäßen Fahrzeugs mit einer Doppelfunktion aufweisend einen Anschluss für eine Datenleitung und einen Anschluss für eine Stromleitung,
- Figur 3: die frontseitige perspektivische Ansicht der Buchse aus Figur 2 und eines entsprechenden in die Buchse einsetzbaren Steckers,
- Figur 4: eine frontseitige perspektivische Ansicht einer Buchse des erfindungsgemäßen Fahrzeugs mit einer Dreifachfunktion, aufweisend einen Anschluss für eine Datenleitung und zwei Anschlüsse für Stromleitungen, und eines entsprechenden in die Buchse einsetzbaren Steckers,
- Figur 5: eine Seitensicht einer Buchse des erfindungsgemäßen Fahrzeugs mit einer Doppelfunktion und einem zusätzlichen Anschluss als integralen Bestandteil der Buchse zur direkten Stromversorgung von verschiedenen Endgeräten durch das Fahrzeugbordnetz.

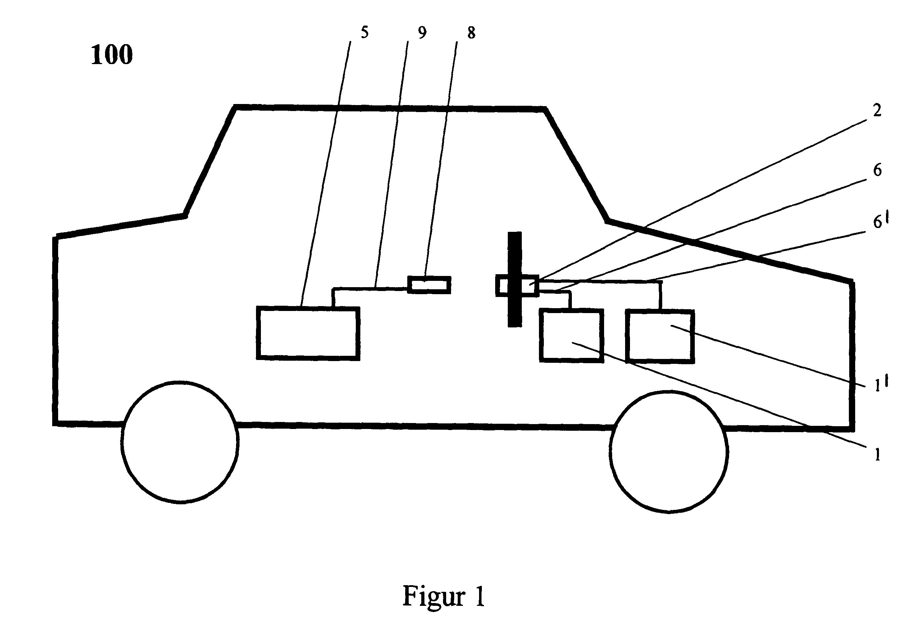

Figur 1 zeigt eine schematische Darstellung eines erfindungsgemäßen Pkw's 100 mit einem Bordnetz 1', mindestens einem Peripheriegerät 1 und mindestens einer Buchse 2 im Interieur des Pkw 100 zur Verbindung von anwenderseitigen Engeräten 5, wie z.B. Notebooks, Mobiltelefone, Pocket PCs, Handhelds etc., mit dem mindestens einen Peripheriegerät 1, beispielsweise ein Infotainment-System, wobei die mindestens eine Buchse 2 über eine Datenleitung 6 mit dem mindestens einen Peripheriegerät 1 und über eine Stromleitung 6' elektrisch mit dem Fahrzeugbordnetz 1'verbunden ist. Die anwenderseitigen Engeräte 5 im Interieur des Pkw sind über eine Leitung 9, die sowohl eine Stromleitung als auch eine Datenleitung aufweist, mit einem entsprechenden in die mindestens eine Buchse 2 einsetzbaren Stecker 8 verbunden.

Der erfindungsgemäße Pkw 100 ermöglicht somit die Kommunikation von verschiedenen anwenderseitigen Engeräten 5 mit dem mindestens einen Peripheriegerät 1, wobei ein anwenderseitiges Endgerät 5 beim Anschluss an die mindestens eine Buchse 2 zugleich durch das Fahrzeugbordnetz 1' mit Strom versorgbar ist.

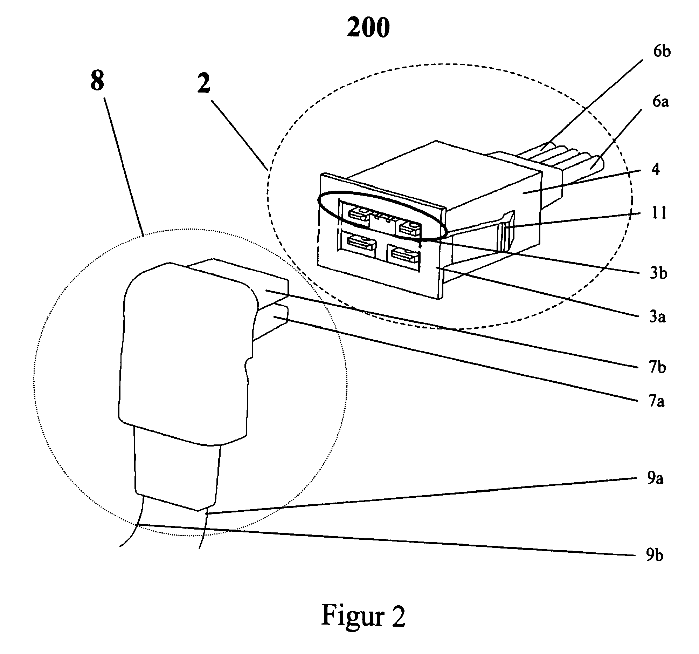

Figur 2 zeigt eine perspektivische Ansicht einer Buchse 2 des erfindungsgemäßen Pkw's 100 mit einer Doppelfunktion gemäß einer ersten Ausführungsform der Erfindung zur Verbindung des mindestens einen Peripheriegeräts 1, beispielsweise einem Infotainment-System, mit anwenderseitigen Engeräten 5, wie z.B. Notebooks, Mobiltelefone, Pocket PCs, Handhelds und dergleichen. Die Doppelfunktion basiert auf der Tatsache, dass die Buchse 2 sowohl einen mit einer Stromleitung 6'verbundenen Anschluss 3a zur Versorgung der anwenderseitigen Endgeräte mit Strom (14V / 20 A max. für Pkw; 28V / 20 A max. für Lkw) als auch einen mit einer Datenleitung 6 verbundenen Anschluss 3b zur Übertragung von Daten zwischen den anwenderseitigen Endgeräten 5 und dem mindestens einen Peripheriegerät 1 aufweist, wobei die beiden Anschlüsse (3a; 3b) der Buchse 2 mittels Kabeln (6a; 6b) mit der Stromleitung 6' und der Datenleitung 6 des erfindungsgemäßen Pkw 100 verbunden sind. Die beiden Anschlüsse (3a; 3b) der Buchse 2 befinden sich in einem als Kunststoff-Spritzteil ausgebildeten Gehäuse 4. Die Datenleitung 6 zur Kommunikation der anwenderseitigen Endgeräte 5 mit dem mindestens einen Peripheriegerät 1 weist ein metallisches Basismaterial als Medium zur Übertragung von Informationssignalen auf und ist als USB-Datenleitung ausgebildet. Entsprechend ist der mit dem Kabel 6b verbundene Anschluss 3b der Buchse zur Anbindung an die Datenleitung 6 als USB Anschluss ausgebildet und eignet sich sowohl zur unidirektionalen als auch zur bidirektionalen Datenübertragung zwischen dem mindestens einen Peripheriegerät 1 des erfindungsgemäßen Pkw's 100 und den anwenderseitigen Endgeräten 5. Der USB Anschluss 3b umfasst zudem eine sekundäre Stromleitung (5V / 2 A max.). Mittels eines entsprechenden in die Buchse 2 einsetzbaren Steckers 8, der mit der Buchse 2 eine Verbindungseinheit 200 bildet, sind die anwenderseitigen Engeräte 5 mit dem mindestens einen Peripheriegerät 1 und dem Fahrzeugbordnetz 1' verbindbar. Der entsprechende Stecker 8 verfügt über ein als Kunststoffspritzteil ausgebildetes Gehäuse mit hohlförmig ausgebildeten Anschlüssen (7a; 7b), die auf die massiv ausgebildeten Anschlüsse (3a; 3b) der Buchse aufsetzbar sind. Die Anschlüsse (7a; 7b) des Steckers sind mit Leitungen (9a; 9b) zur Verbindung des Steckers 8 mit dem anwenderseitigen Endgerät 5 verbunden. Während die Anschlüsse (3a; 3b) der Buchse 2 zweckmäßigerweise zur sicheren und stabilen Konnektierung mit den Anschlüssen (7a; 7b) des entsprechenden Steckers 8 aus einem Federstahl ausgebildet sind, weisen die Anschlüsse (7a; 7b) des Steckers 8 einen Bronze - Werkstoff auf. Um die Buchse 2 zur sicheren Konnektierung mit dem entsprechenden in die Buchse 2 einsetzbaren Stecker 8 mechanisch zu verrasten, ist die Buchse 2 mit einer Verrastungsvorrichtung 11 versehen, bei der die für die Verrastung notwendigen Komponenten aus Kunststoff bestehen, die in die Gehäusewand der Buchse 2 integriert sind. Zudem ist die Buchse 2 mit einem hier nicht dargestellten Verpolschutz mittels Polschutzdioden versehen, um eine unbeabsichtigte Verdrehung der Anschlusspolarität zu vermeiden. Die Buchse 2 weist außerdem eine lichtemittierende Diode (LED) als Lichtquelle zur Beleuchtung der Buchse 2 auf, die hier ebenfalls nicht dargestellt ist. Des Weiteren verfügt die Buchse 2 über eine drahtlose Schnittstelle zur drahtlosen Kommunikation zwischen anwenderseitigen Endgeräten 5 mit dem mindestens einen Peripheriegerät 1, die gemäß dieser bevorzugten Ausführungsform eine Infrarot-Schnittstelle zur Infrarot-Kommunikation über kurze Distanz ist.

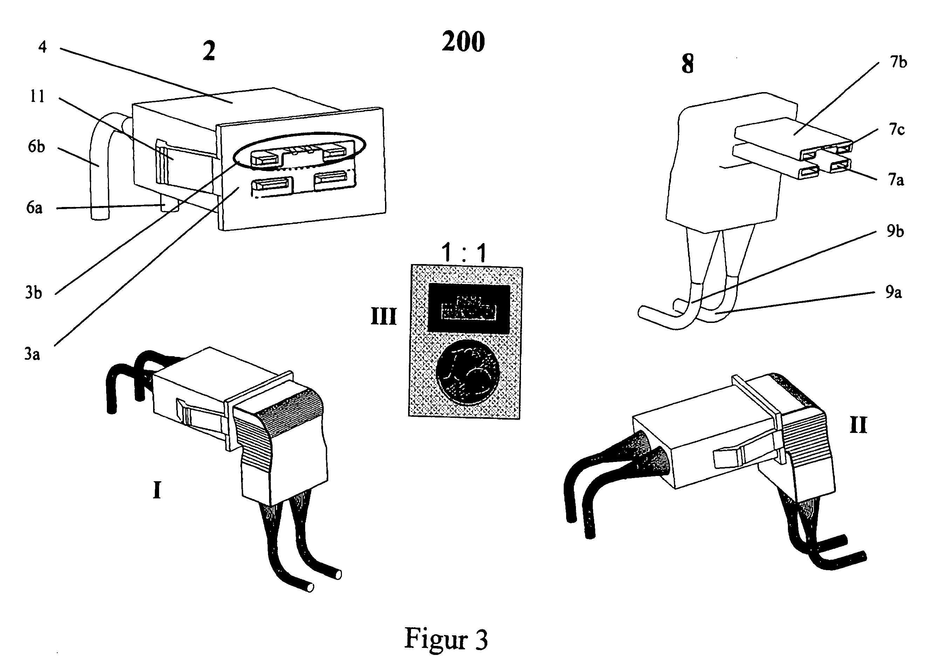

In Figur 3 ist die frontseitige perspektivische Ansicht der mindestens einen Buchse 2 aus Figur 2 des erfindungsgemäßen Pkw's 100 mit einem entsprechenden in die Buchse 2 einsetzbaren Stecker 8 abgebildet. Zur Veranschaulichung der relativ kleinen Einbaumaße der Buchse 2 ist in der Mitte der Figur 3 eine Gegenüberstellung III der Buchse 2 zu einem 1 Euro Cent abgebildet. Darüber hinaus sind in der unteren Hälfte von Figur 3 zwei verschiedene perspektivische Ansichten (I; II) der Verbindungseinheit 200, bestehend aus der Buchse 2 und dem entsprechenden Stecker 8, im zusammengebauten Zustand dargestellt.

Die Buchse 2 des erfindungsgemäßen Pkw's 100 eignet sich aufgrund ihrer sehr kleinen Einbaumaße für den Verbau in mit Unterhaltungs- und Informationssystemen bzw. Multimedia-Systemen ausgestattete Pkw, wobei als mögliche Einbauorte beispielsweise Cockpits, Armaturenbretter, Mittelkonsolen oder Sitze von Pkw in Frage kommen. Insbesondere hinsichtlich zukünftiger Fahrzeug- bzw. Pkw-Entwicklungen wird die Buchse 2 des erfindungsgemäßen Pkw 100 der strikten Forderung nach kleinen Einbaumaßen aufgrund des immer stärkeren Einzugs von Unterhaltungselementen und Informationselementen in das Interieur von Pkw gerecht.

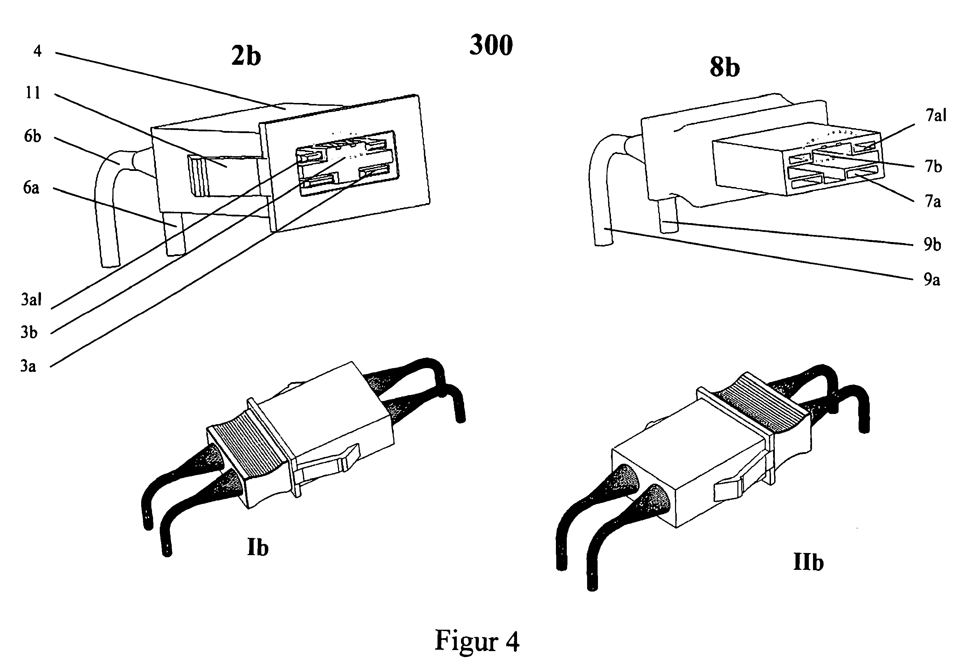

Figur 4 zeigt eine perspektivische Ansicht einer Buchse 2b des erfindungsgemäßen Pkw 100 mit einer Dreifachfunktion gemäß einer zweiten Ausführungsform der Erfindung zur Verbindung des mindestens einen Peripheriegeräts 1, beispielsweise einem Infotainment-System, mit anwenderseitigen Engeräten 5, wie z.B. Notebooks, Mobiltelefone, Pocket PCs, Handhelds und dergleichen. Die Dreifachfunktion basiert auf der Tatsache, dass die mindestens eine Buchse 2 sowohl zwei mit zwei Stromleitungen (6' 6") verbundene Anschlüsse (3a; 3a') zur Versorgung der anwenderseitigen Endgeräte mit Strom (14V / 20 A max. für Pkw; 28V / 20 A max. für Lkw bzw. 5V / 2 A max.) als auch einen mit einer Datenleitung 6 verbundenen Anschluss 3b zur Übertragung von Daten zwischen den anwenderseitigen Endgeräten 5 und dem mindestens einen Peripheriegerät 1 aufweist, wobei die drei Anschlüsse (3a; 3a^{I}; 3b) der mindestens einen Buchse 2 mittels Kabeln (6a; 6b) mit den Stromleitungen (6'; 6") und der Datenleitung 6 des erfindungsgemäßen Pkw's 100 verbunden sind. Die drei Anschlüsse (3a; 3a' 3b) der mindestens einen Buchse 2 befinden sich in einem rahmenförmigen mit Vergussmasse aufgefüllten Kunststoffgehäuse 4. Die Datenleitung 6 zur Kommunikation der anwenderseitigen Endgeräte 5 mit dem mindestens einen Peripheriegerät 1 weist ein metallisches Basismaterial als Medium zur Übertragung von Informationssignalen auf und ist als USB-Datenleitung ausgebildet. Entsprechend ist der mit dem Kabel 6b verbundene Anschluss 3b der Buchse zur Anbindung an die Datenleitung 6 als USB Anschluss ausgebildet und eignet sich sowohl zur unidirektionalen als auch zur bidirektionalen Datenübertragung zwischen dem mindestens einen Peripheriegerät 1 des erfindungsgemäßen Pkw's 100 und den anwenderseitigen Endgeräten 5. Der USB Anschluss 3b umfasst zudem eine sekundäre Stromleitung (5V / 2 A max.). Mittels eines entsprechenden in die Buchse 2 einsetzbaren Steckers 8, der mit der Buchse 2 eine Verbindungseinheit 300 bildet, sind die anwenderseitigen Engeräte 5 mit dem mindestens einen Peripheriegerät 1 und dem Fahrzeugbordnetz 1' verbindbar. Der entsprechende Stecker 8 verfügt über ein rahmenförmiges mit Vergussmasse aufgefülltes Kunststoffgehäuse mit hohlförmig ausgebildeten Anschlüssen (7a; 7a'; 7b), die auf die massiv ausgebildeten Anschlüsse (3a; 3a'; 3b) der Buchse aufsetzbar sind. Die Anschlüsse (7a; 7a'; 7b) des Steckers sind mit Leitungen (9a; 9b) zur Verbindung des Steckers 8 mit dem anwenderseitigen Endgerät 5 verbunden. Während die Anschlüsse (3a; 3a '; 3b) der Buchse 2 zweckmäßigerweise zur sicheren und stabilen Konnektierung mit den Anschlüssen (7a; 7a'; 7b) des entsprechenden Steckers 8 aus einem Federstahl ausgebildet sind, weisen die Anschlüsse (7a; 7a'; 7b) des Steckers 8 einen Messing - Werkstoff auf. Um die Buchse 2b zur sicheren Konnektierung mit einem entsprechend in die Buchse 2b einsetzbaren Stecker 8b mechanisch zu verrasten, ist die mindestens eine Buchse 2b mit einer Verrastungsvorrichtung 11 versehen, bei der die für die Verrastung notwendigen Komponenten aus Kunststoff bestehen, die in die Gehäusewand der Buchse 2b integriert sind. Zudem ist die Buchse 2b mit einem hier nicht dargestellten Verpolschutz mittels Polschutzdioden versehen, um eine unbeabsichtigte Verdrehung der Anschlusspolarität zu vermeiden. Die Buchse 2b weist außerdem einen Lichtleiter als Lichtquelle zur Beleuchtung der Buchse 2b auf, die hier ebenfalls nicht dargestellt ist. Des Weiteren ist nicht dargestellt, dass die Buchse 2b zudem über eine drahtlose Schnittstelle zur drahtlosen Kommunikation zwischen anwenderseitigen Endgeräten 5 mit dem mindestens einen Peripheriegerät 1 verfügt, die gemäß dieser bevorzugten Ausführungsform eine Funk-Schnittstelle zur Funk-Kommunikation über kurze Distanz ist, wobei die Funk-Schnittstelle eine Bluetooth USB Schnittstelle für USB Anwendungen im erfindungsgemäßen Pkw 100 umfasst.

Die vorangehend in den bevorzugten Ausführungsformen der Erfindung beschriebene Buchse 2 bzw. 2b des erfindungsgemäßen Pkw's 100 verfügt über jeweils einen Deckel zur Abdeckung der Buchse 2 bzw. 2b bei Nichtbenutzung, wobei die jeweiligen Deckel hier ebenfalls nicht dargestellt sind.

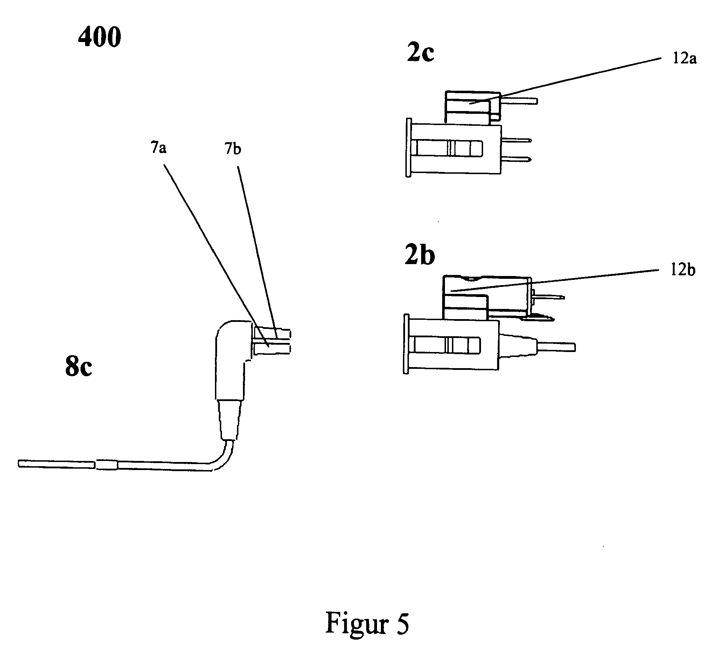

Figur 5 zeigt eine Verbindungseinheit 400 in der Seitenansicht, bestehend aus der Buchse 2c, der Buchse 2d und eines entsprechenden in die beiden Buchsen 2c und 2d einsetzbaren Steckers 8c mit den Anschlüssen (7a; 7b), wobei die beiden Buchsen 2d und 2e jeweils eine Doppelfunktion aufweisen, d.h. sowohl über einen Anschluss zur Anbindung an eine Datenleitung als auch einen Anschluss zur Anbindung an eine Stromleitung verfügen. Die beiden Buchsen 2d und 2e verfügen zudem auf der Oberseite ihrer als Kunststoff-Spritzteile ausgebildeten Gehäuse jeweils über einen zusätzlichen Anschluss 12a bzw. 12b als integralen Bestandteil zur direkten Versorgung beispielsweise eines Mobiltelefons mit Strom durch das Fahrzeugbordnetz. Mittels entsprechender anschließbarer Adapter ist die direkte Stromversorgung verschiedener Endgeräte, wie z.B. Pocket PCs und Handhelds und dergleichen, möglich.

## Patentansprüche

1. Fahrzeug mit einem Bordnetz (1'), mindestens einem Multimedia-Peripheriegerät (1) und mindestens einem anwenderseitigen mobilen Multimedia-Endgerät (5) sowie mindestens einer ein Gehäuse (4) aufweisenden Buchse (2) und mindestens einem mit der Buchse verbindbaren Stecker (8) zur Verbindung des mindestens einen anwenderseitigen Endgeräts (5) mit dem mindestens einen Peripheriegerät (1), wobei die Buchse (2) zusammen mit dem Stecker (8) eine Buchse-Stecker-Anordnung bildet, wobei die mindestens eine Buchse (2) sowohl mindestens einen mit einer Stromleitung (6') verbundenen Anschluss (3a) zur Versorgung des anwenderseitigen Endgerätes (5) mit Strom als auch mindestens einen mit einer Datenleitung (6) verbundenen Anschluss (3b) zur Übertragung von Daten zwischen dem anwenderseitigen Endgerät (5) und dem mindestens einen Peripheriegerät (1) aufweist, wobei die Stromleitung (6') elektrisch mit dem Bordnetz (1') und die Datenleitung (6) mit dem Peripheriegerät (1) verbunden ist, **dadurch gekennzeichnet, dass** das anwenderseitige Endgerät (5) über eine Stromleitung und eine Datenleitung (9a, 9b) mit den Anschlüssen (7a, 7b) des Steckers (8) verbunden ist.

2. Fahrzeug nach Anspruch 1, **dadurch gekennzeichnet, dass** die mindestens eine Datenleitung (6) ein metallisches Basismaterial als Medium zur Übertragung von Informationssignalen aufweist.

3. Fahrzeug nach Anspruch 1, **dadurch gekennzeichnet, dass** die mindestens eine Datenleitung (6) einen Lichtwellenleiter als Medium zur Übertragung von Informationssignalen aufweist.

4. Fahrzeug nach Anspruch 2, **dadurch gekennzeichnet, dass** die mindestens eine Datenleitung (6) eine USB-Datenleitung ist.

5. Fahrzeug nach Anspruch 3, **dadurch gekennzeichnet, dass** der Lichtwellenleiter aus Kunststofffaser ausgebildet ist.

6. Fahrzeug nach Anspruch 1, **dadurch gekennzeichnet, dass** der mindestens eine mit der Stromleitung (6') verbundene Anschluss (3a) und der mindestens eine mit der Datenleitung (6) verbundene Anschluss (3b) der mindestens einen Buchse (2) derart ausgebildet ist, dass die Anschlüsse (7a; 7b) eines entsprechenden Steckers (8) in die Anschlüsse (3a; 3b) der mindestens einen Buchse (2) einsetzbar sind.

7. Fahrzeug nach Anspruch 1, **dadurch gekennzeichnet, dass** der mindestens eine mit der Stromleitung (6') verbundene Anschluss (3a) und der mindestens eine mit der Datenleitung (6) verbundene Anschluss (3b) der mindestens einen Buchse (2) derart ausgebildet ist, dass die Anschlüsse (7a; 7b) eines entsprechenden Steckers (8) auf die Anschlüsse (3a; 3b) der mindestens einen Buchse (2) aufsetzbar sind.

8. Fahrzeug nach Anspruch 6 oder 7, **dadurch gekennzeichnet, dass** der mindestens eine mit der Datenleitung (6) verbundene Anschluss (3b) der mindestens einen Buchse (2) als USB Anschluss ausgebildet ist.

9. Fahrzeug nach einem der Ansprüche 6 bis 8, **dadurch gekennzeichnet, dass** die Anschlüsse (3a; 3b) der mindestens einen Buchse (2) aus einem Federstahl bestehen.

10. Fahrzeug nach einem der Ansprüche 1 bis 9, **dadurch gekennzeichnet, dass** der mindestens eine erste Anschluss (3a) und der mindestens eine zweite Anschluss (3b) der mindestens einen Buchse (2) mittels Kabeln (6a; 6b) mit der Stromleitung (6') und der Datenleitung (6) verbindbar sind.

11. Fahrzeug nach einem der Ansprüche 1 bis 9, **dadurch gekennzeichnet, dass** der mindestens eine erste Anschluss (3a) und der mindestens eine zweite Anschluss (3b) der mindestens einen Buchse (2) mittels Flachsteckern mit der Stromleitung (6') und der Datenleitung (6) verbindbar sind.

12. Fahrzeug nach einem der Ansprüche 1 bis 11, **dadurch gekennzeichnet, dass** das Gehäuse (4) der mindestens einen Buchse (2) als rahmenförmiges mit Vergussmasse aufgefülltes Kunststoffgehäuse ausgebildet ist.

13. Fahrzeug nach einem der Ansprüche 1 bis 11, **dadurch gekennzeichnet, dass** das Gehäuse (4) der mindestens einen Buchse (2) als Kunststoff-Spritzteil ausgebildet ist.

14. Fahrzeug nach einem der Ansprüche 1 bis 13, **dadurch gekennzeichnet, dass** das Gehäuse (4) der mindestens einen Buchse (2) Mittel (11) zur mechanischen Verrastung des mindestens einen Steckers (8) mit der mindestens einen Buchse (2) aufweist.

15. Fahrzeug nach einem der Ansprüche 1 bis 14, **dadurch gekennzeichnet, dass** die mindestens eine Buchse (2) mit einem Verpolschutz ausgebildet ist.

16. Fahrzeug nach einem der Ansprüche 1 bis 15, **dadurch gekennzeichnet, dass** die mindestens eine Buchse (2) über eine Lichtquelle zur Beleuchtung verfügt.

17. Fahrzeug nach Anspruch 16, **dadurch gekennzeichnet, dass** die Lichtquelle der mindestens einen Buchse (2) eine Glühbirne ist.

18. Fahrzeug nach Anspruch 16, **dadurch gekennzeichnet, dass** die Lichtquelle der mindestens einen Buchse (2) eine lichtemittierende Diode (LED) ist.

19. Fahrzeug nach Anspruch 16, **dadurch gekennzeichnet, dass** die Lichtquelle der mindestens einen Buchse (2) ein Lichtleiter ist.

20. Fahrzeug nach einem der Ansprüche 1 bis 19, **dadurch gekennzeichnet, dass** die mindestens eine Buchse (2) über mindestens einen weiteren Anschluss (12a), (12b) als integralen Bestandteil der mindestens einen Buchse (2) zur direkten Aufladung von weiteren anwenderseitigen Endgeräten (5) verfügt.

21. Fahrzeug nach Anspruch 1, **dadurch gekennzeichnet, dass** die mindestens eine Buchse (2) über eine drahtlose Schnittstelle zur drahtlosen Kommunikation zwischen den anwenderseitigen Endgeräten (5) mit dem mindestens einen Peripheriegerät (1) verfügt.

22. Fahrzeug nach Anspruch 21, **dadurch gekennzeichnet, dass** die drahtlose Schnittstelle eine Infrarot-Schnittstelle zur Infrarot-Kommunikation zwischen anwenderseitigen Endgeräten (5) mit dem mindestens einen Peripheriegerät (1) über kurze Distanz ist.

23. Fahrzeug nach Anspruch 21, **dadurch gekennzeichnet, dass** die drahtlose Schnittstelle eine Funkschnittstelle zur Funkkommunikation zwischen anwenderseitigen Endgeräten (5) mit dem mindestens einen Peripheriegerät (1) über kurze Distanz ist.

24. Fahrzeug nach Anspruch 23, **dadurch gekennzeichnet, dass** die Funkschnittstelle eine Bluetooth USB Schnittstelle ist.

25. Fahrzeug nach Anspruch 21, **dadurch gekennzeichnet, dass** die drahtlose Schnittstelle eine Funkschnittstelle zur Funkkommunikation zwischen anwenderseitigen Endgeräten (5) mit dem mindestens einen Peripheriegerät (1) in einem lokalen Wireless Local Area Network WLAN Funknetzwerk ist.

## Claims

1. Vehicle having an electrical system (1'), at least one multimedia peripheral (1) and at least one mobile, multimedia, user-side terminal (5), plus at least one socket (2) having a shell (4) and at least one plug (8), able to be connected to the socket, for connecting the at least one user-side terminal (5) to the at least one peripheral (1), the socket (2) forming, together with the plug (8), a plug-and-socket arrangement, the at least one socket (2) having both at least one connection (3a), connected to a current conductor (6'), for supplying the user-side terminal (5) with current and at least one connection (3b), connected to a data line (6), for transmitting data between the user-side terminal (5) and the at least one peripheral (1), the current conductor (6') being electrically connected to the electrical system (1') and the data line (6) being electrically connected to the peripheral (1), **characterised in that** the user-side terminal (5) is connected to the connections (7a, 7b) of the plug (8) via a current conductor and a data line (9a, 9b).

2. Vehicle according to claim 1, **characterised in that** the at least one data line (6) has a metal base material as a medium for transmitting information signals.

3. Vehicle according to claim 1, **characterised in that** the at least one data line (6) has a light guide as a medium for transmitting information signals.

4. Vehicle according to claim 2, **characterised in that** the at least one data line (6) is a USB data line.

5. Vehicle according to claim 3, **characterised in that** the light guide is formed from fibres of plastics material.

6. Vehicle according to claim 1, **characterised in that** the at least one connection (3a) of the at least one socket (2) which is connected to the current conductor (6') and the at least one connection (3b) thereof which is connected to the data line (6) are so designed that the connections (7a, 7b) of an appropriate plug (8) can be inserted in the connections (3a, 3b) of the at least one socket (2).

7. Vehicle according to claim 1, **characterised in that** the at least one connection (3a) of the at least one socket (2) which is connected to the current conductor (6') and the at least one connection (3b) thereof which is connected to the data line (6) are so designed that the connections (7a, 7b) of an appropriate plug (8) can be inserted onto the connections (3a, 3b) of the at least one socket (2).

8. Vehicle according to claim 6 or 7, **characterised in that** the at least one connection (3a) of the at least one socket (2) which is connected to the data line (6) is in the form of a USB connection.

9. Vehicle according to one of claims 6 to 8, **characterised in that** the connections (3a, 3b) of the at least one socket (2) are composed of a spring steel.

10. Vehicle according to one of claims 1 to 9, **characterised in that** the at least one first connection (3a) of the at least one socket (2) and the at least one second connection (3b) thereof can be connected to the current conductor (6') and the data line (6) by means of cables (6a, 6b)

11. Vehicle according to one of claims 1 to 9, **characterised in that** the at least one first connection (3a) of the at least one socket (2) and the at least one second connection (3b) thereof can be connected to the current conductor (6') and the data line (6) by means of blade terminals.

12. Vehicle according to one of claims 1 to 11, **characterised in that** the shell (4) of the at least one socket (2) is in the form of a frame-like shell of plastics material which is filled with sealing compound.

13. Vehicle according to one of claims 1 to 11, **characterised in that** the shell (4) of the at least one socket (2) is in the form of an injection moulding of plastics material.

14. Vehicle according to one of claims 1 to 13, **characterised in that** the shell (4) of the at least one socket (2) has means (11) for latching the at least one plug (8) mechanically to the at least one socket (2).

15. Vehicle according to one of claims 1 to 14, **characterised in that** the at least one socket (2) is designed to have anti-misconnection keying.

16. Vehicle according to one of claims 1 to 15, **characterised in that** the at least one socket (2) has a light source for illumination.

17. Vehicle according to claim 16, **characterised in that** the light source of the at least one socket (2) is an incandescent bulb.

18. Vehicle according to claim 16, **characterised in that** the light source of the at least one socket (2) is a light-emitting diode (LED).

19. Vehicle according to claim 16, **characterised in that** the light source of the at least one socket (2) is a light guide.

20. Vehicle according to one of claims 1 to 19, **characterised in that** the at least one socket (2) has, as an integral part thereof, at least one further connection (12a), (12b) for the direct charging of further user-side terminals (5).

21. Vehicle according to claim 1, **characterised in that** the at least one socket (2) has a wireless interface for wireless communications between the user-side terminals (5) and the at least one peripheral (1).

22. Vehicle according to claim 21, **characterised in that** the wireless interface is an infrared interface for short-range infrared communications between user-side terminals (5) and the at least one peripheral (1).

23. Vehicle according to claim 21, **characterised in that** the wireless interface is a radio interface for short-range radio communications between user-side terminals (5) and the at least one peripheral (1).

24. Vehicle according to claim 23, **characterised in that** the radio interface is a Bluetooth USB interface.

25. Vehicle according to claim 21, **characterised in that** the wireless interface is a radio interface for radio communications between user-side terminals (5) and the at least one peripheral (1) on a wireless local area network (WLAN).

## Revendications

1. Véhicule comprenant un réseau de bord (1'), au moins un appareil périphérique multimédia (1) et au moins un poste terminal multimédia mobile de côté utilisateur (5) ainsi qu'au moins une prise femelle (2) comprenant un boîtier (4) et au moins une prise mâle (8) pouvant être reliée à la prise femelle, destinée à relier le au moins un poste terminal de côté utilisateur (5) à le au moins un appareil périphérique (1), la prise femelle (2) formant conjointement avec la prise mâle (8) un agencement à prise femelle et prise mâle, la au moins une prise femelle (2) comprenant aussi bien au moins un raccord (3a) relié à une conduite de courant (6') destiné à alimenter le poste terminal de coté utilisateur (5) en courant qu'au moins un raccord (3b) relié à une conduite de données (6) destiné à transférer des données entre le poste terminal de côté utilisateur (5) et le au moins un appareil périphérique (1), la conduite de courant (6') étant reliée électriquement au réseau de bord (1') et la conduite de données (6) étant reliée à l'appareil périphérique (1), **caractérisé en ce que** le poste terminal de côté utilisateur (5) est relié par une conduite de courant et une conduite de données (9a, 9b) aux raccords (7a, 7b) de la prise mâle (8).

2. Véhicule selon la revendication 1, **caractérisé en ce que** la au moins une conduite de données (6) comprend un matériau de base métallique comme support de transfert des signaux d'information.

3. Véhicule selon la revendication 1, **caractérisé en ce que** la au moins une conduite de données (6) comprend un guide d'onde optique comme support de transfert de signaux d'information.

4. Véhicule selon la revendication 2, **caractérisé en ce que** la au moins une conduite de données (6) est une conduite de données USB.

5. Véhicule selon la revendication 3, **caractérisé en ce que** le guide d'onde optique est réalisé en fibres synthétiques.

6. Véhicule selon la revendication 1, **caractérisé en ce que** le au moins un raccord (3a) relié à la conduite de courant (6') et le au moins un raccord (3b) relié à la conduite de données (6) de la au moins une prise femelle (2) sont conçus de telle sorte que les raccords (7a ; 7b) d'une prise mâle (8) correspondante peuvent être insérés dans les raccords (3a ; 3b) de la au moins une prise femelle (2).

7. Véhicule selon la revendication 1, **caractérisé en ce que** le au moins un raccord (3a) relié à la conduite de courant (6') et le au moins un raccord (3b) relié à la conduite de données (6) de la au moins une prise femelle (2) sont conçus de telle sorte que les raccords (7a ; 7b) d'une prise mâle (8) correspondante peuvent être placés sur les raccords (3a ; 3b) de la au moins une prise femelle (2).

8. Véhicule selon la revendication 6 ou 7, **caractérisé en ce que** le au moins un raccord (3b) relié à la conduite de données (6) de la au moins une prise femelle (2) est conçu comme un raccord USB.

9. Véhicule selon l'une quelconque des revendications 6 à 8, **caractérisé en ce que** les raccords (3a ; 3b) de la au moins une prise femelle (2) sont constitués d'un acier de ressort.

10. Véhicule selon l'une quelconque des revendications 1 à 9, **caractérisé en ce que** le au moins un premier raccord (3a) et le au moins un second raccord (3b) de la au moins une prise femelle (2) peuvent être reliés au moyen de câbles (6a ; 6b) à la conduite de courant (6') et à la conduite de données (6).

11. Véhicule selon l'une quelconque des revendications 1 à 9, **caractérisé en ce que** le au moins un premier raccord (3a) et le au moins un second raccord (3b) de la au moins une prise femelle (2) peuvent être reliés au moyen de prises mâles plates à la conduite de courant (6') et à la conduite de données (6).

12. Véhicule selon l'une quelconque des revendications 1 à 11, **caractérisé en ce que** le boîtier (4) de la au moins une prise femelle (2) est conçu comme un boîtier en matière plastique en forme de cadre rempli d'une masse de remplissage.

13. Véhicule selon l'une quelconque des revendications 1 à 11, **caractérisé en ce que** le boîtier (4) de la au moins une prise femelle (2) est conçu comme une pièce injectée en matière plastique.

14. Véhicule selon l'une quelconque des revendications 1 à 13, **caractérisé en ce que** le boîtier (4) de la au moins une prise femelle (2) comprend des moyens (11) destinés à l'enclenchement mécanique de la au moins une prise mâle (8) avec la au moins une prise femelle (2).

15. Véhicule selon l'une quelconque des revendications 1 à 14, **caractérisé en ce que** la au moins une prise femelle (2) est conçue avec une protection de polarisation.

16. Véhicule selon l'une quelconque des revendications 1 à 15, **caractérisé en ce que** la au moins une prise femelle (2) dispose d'une source de lumière pour l'éclairage.

17. Véhicule selon la revendication 16, **caractérisé en ce que** la source de lumière de la au moins une prise femelle (2) est une lampe à incandescence.

18. Véhicule selon la revendication 16, **caractérisé en ce que** la source de lumière de la au moins une prise femelle (2) est une diode électroluminescente (DEL).

19. Véhicule selon la revendication 16, **caractérisé en ce que** la source de lumière de la au moins une prise femelle (2) est un conducteur optique.

20. Véhicule selon l'une quelconque des revendications 1 à 19, **caractérisé en ce que** la au moins une prise femelle (2) dispose d'au moins un autre raccord (12a), (12b) comme constituant intégral de la au moins une prise femelle (2) pour recharger directement les autres postes terminaux de côté utilisateur (5).

21. Véhicule selon la revendication 1, **caractérisé en ce que** la au moins une prise femelle (2) dispose d'une interface sans fil destinée à la communication sans fil entre les postes terminaux de côté utilisateur (5) et le au moins un appareil périphérique (1).

22. Véhicule selon la revendication 21, **caractérisé en ce que** l'interface sans fil est une interface à infrarouges destinée à la communication par infrarouges entre les postes terminaux de côté utilisateur (5) et le au moins un appareil périphérique (1) sur une courte distance.

23. Véhicule selon la revendication 21, **caractérisé en ce que** l'interface sans fil est une interface radio destinée à la communication radio entre les postes terminaux de coté utilisateur (5) et le au moins un appareil périphérique (1) sur une courte distance.

24. Véhicule selon la revendication 23, **caractérisé en ce que** l'interface radio est une interface bluetooth USB.

25. Véhicule selon la revendication 21, **caractérisé en ce que** l'interface sans fil est une interface radio destinée à la communication radio entre les postes terminaux de côté utilisateur (5) et le au moins un appareil périphérique (1) dans un réseau radio WLAN (Wireless Local Area Network).
